Europäisches Patentamt

European Patent Office

Office européen des brevets

(19)

(11) EP 0 979 015 B1

(12) FASCICULE DE BREVET EUROPEEN

(45) Date de publication et mention
de la délivrance du brevet:
**09.11.2005 Bulletin 2005/45**

(51) Int Cl.⁷: **H04Q 3/66**, H04Q 3/62

(21) Numéro de dépôt: **99401987.5**

(22) Date de dépôt: **05.08.1999**

(54) **Routage des appels vers l'extérieur depuis un réseau privé**

Leitweglenkung von von einem privaten Netz ausgehenden Anrufen

Routing of calls outwards a private network

(84) Etats contractants désignés:
**AT CH DE ES GB IT LI SE**

(30) Priorité: **06.08.1998 FR 9810132**

(43) Date de publication de la demande:
**09.02.2000 Bulletin 2000/06**

(73) Titulaire: **ALCATEL**
**75008 Paris (FR)**

(72) Inventeurs:
• **Phan, Cao Thank**
**92500 Rueil Malmaison (FR)**
• **Tran, Nhut Quan**
**95800 Cergy (FR)**

(74) Mandataire: **Sciaux, Edmond et al**
**COMPAGNIE FINANCIERE ALCATEL**
**Département Propriété Industrielle**
**54, rue La Boétie**
**75008 Paris (FR)**

(56) Documents cités:
**EP-A- 0 798 942**     **EP-A- 0 868 097**
**EP-A- 0 868 099**     **DE-A- 19 614 926**
**GB-A- 2 300 089**     **US-A- 5 274 643**
**US-A- 5 337 352**

• **WERNER W: "WIRTSCHAFTLICHKEIT ALS OBERSTES GEBOT" TELCOM REPORT, vol. 19, no. 4, 1996, pages 23-25, XP000629281**
• **N SHAYE: "Private Interconnect Networks Overview" GTE AUTOMATIC ELECTRIC WORLD-WIDE COMMUNICATIONS JOURNAL, vol. 20, no. 1, 1982, pages 2-12, XP002101198 Northlake (US)**
• **TORRIERI D: "ALGORITHMS FOR FINDING AN OPTIMAL SET OF SHORT DISJOINT PATHS IN A COMMUNICATION NETWORK" IEEE TRANSACTIONS ON COMMUNICATIONS, vol. 40, no. 11, 1 novembre 1992 (1992-11-01), pages 1698-1702, XP000336308**
• **CHIA-JIU WANG ET AL: "THE USE OF ARTIFICIAL NEURAL NETWORKS FOR OPTIMAL MESSAGE ROUTING" IEEE NETWORK: THE MAGAZINE OF COMPUTER COMMUNICATIONS, vol. 9, no. 2, 1 mars 1995 (1995-03-01), pages 16-24, XP000493486**

**Description**

La présente invention a pour objet un procédé de routage d'un appel vers un réseau extérieur à partir d'un noeud appelant d'un réseau privé présentant une pluralité de faisceaux d'accès à un réseau extérieur.

L'invention concerne les réseaux privés de télécommunications. De tels réseaux sont formés de noeuds de communication, reliés entre eux par des arcs ou artères acheminant les communications et/ou la signalisation. Dans un tel réseau, certains des noeuds présentent des faisceaux permettant d'accéder à l'extérieur du réseau, par exemple pour un appel destiné à l'extérieur du réseau, ou encore pour un débordement vers l'extérieur du réseau dans le cas d'une saturation des ressources du réseau.

Dans les réseaux privés connus, on procède à la prise de faisceau donnant sur un réseau externe, en acheminant l'appel depuis l'abonné demandeur jusqu'au noeud contenant les accès physiques du faisceau, puis en faisant un départ d'appel vers le réseau externe à partir de ce noeud. Le noeud d'accès est une donnée statique du faisceau: pour un abonné relié à un noeud donné du réseau privé, la prise d'un faisceau s'effectue toujours de la même manière. Le mécanisme est le même en cas de débordement vers le réseau externe.

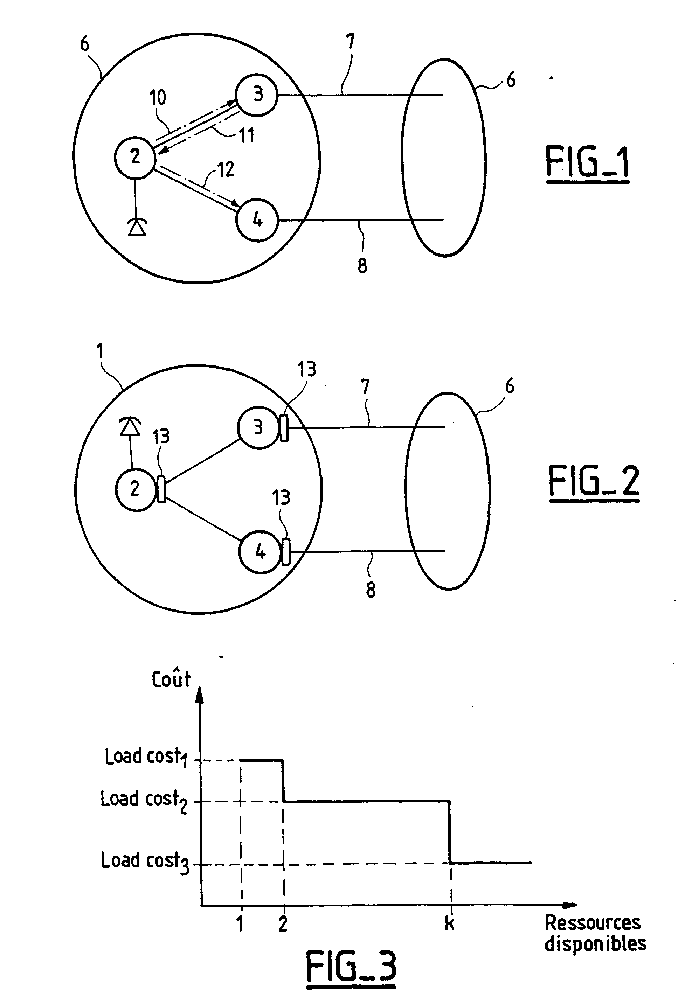

Un noeud du réseau privé présente une liste de faisceaux de débordement, qui sont utilisés successivement en cas de problèmes. En cas de saturation ou d'indisponibilité des accès du faisceau demandé, l'appel est refoulé depuis le noeud contenant les accès physiques du faisceau vers le noeud d'origine; le noeud d'origine réitère la demande de faisceau, en utilisant le faisceau suivant de la liste. La figure 1 montre un exemple de réseau fonctionnant selon ce principe. On a représenté sur la figure 1 un réseau privé 1, comprenant trois noeuds 2, 3 et 4. Les noeuds 3 et 4 présentent chacun un accès 7 et 8 vers un réseau externe 6, qui peut être un autre réseau privé ou le réseau public. Le noeud 2 contient une liste de faisceaux (7, 8); en cas de demande de prise de faisceau par un abonné du noeud 2, la demande de prise de faisceau retourne une liste de routage permettant d'accéder au noeud 3 et au faisceau 7. La demande est transmise au noeud 3, comme symbolisé sur la figure par la flèche 10; si les ressources ne sont pas disponibles, la demande est retournée au noeud 2 de départ, voir la flèche 11 sur la figure, et on passe au deuxième faisceau 8 de la liste, comme représenté par la flèche 12. Si le faisceau est aussi saturé ou indisponible, la demande est encore une fois renvoyée vers le noeud 2.

Un tel procédé, utilisant de plus une fonction de routage à moindre coût (Least Cost Routing), est divulgué dans le document DE 196 14 926.

Cette solution pose des problèmes de trafic important en cas de saturation des faisceaux. Elle rallonge la durée d'établissement des appels vers les faisceaux externes. Elle ne permet pas de gérer efficacement les différentes ressources disponibles dans le réseau, et ne permet pas d'adapter les demandes à la charge du réseau.

L'invention propose une solution à ces problèmes; elle permet de gérer plus efficacement les accès au réseaux externes et les ressources du réseau privé. Elle limite le trafic à travers le réseau privé généré par l'accès aux faisceaux.

Pour cela, l'invention propose un procédé de routage d'un appel vers un réseau extérieur à partir d'un noeud appelant d'un réseau privé présentant une pluralité de faisceaux d'accès à un réseau extérieur, chaque faisceau étant relié à un noeud passerelle du réseau privé, le procédé comprenant:

- le calcul d'un coût pour différents routages possibles vers le réseau extérieur, le coût d'un routage vers le réseau extérieur étant fonction du faisceau utilisé et du routage dans le réseau privé entre le noeud appelant et le noeud passerelle dudit faisceau utilisé;
- le choix d'un routage en fonction des coûts calculés.

Dans un mode de mise en oeuvre de l'invention, le coût d'un routage vers le réseau extérieur est une fonction décroissante des ressources disponibles sur le faisceau utilisé.

De préférence, le coût d'un routage vers le réseau extérieur est une fonction décroissante de la charge des artères utilisées pour le routage dans le réseau privé.

Le coût d'un routage vers le réseau extérieur peut aussi être une fonction décroissante du nombre d'artères utilisées pour le routage dans le réseau privé.

Dans un autre mode de mise en oeuvre de l'invention, l'étape de choix s'effectue de sorte à minimiser le coût du routage vers le réseau extérieur.

Avantageusement, le procédé comprend aussi l'échange dans le réseau privé de messages de maintenance entre les différents noeuds passerelles.

Dans ce cas, un message de maintenance contient avantageusement des informations sur les ressources disponibles d'un faisceau d'un noeud passerelle.

L'étape de calcul des différents routages possibles vers le réseau extérieur s'effectue de préférence par application de l'algorithme de Dijkstra.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un réseau privé connu;
- figure 2 une représentation schématique d'un réseau privé dans lequel l'invention est mise en oeuvre;

- figure 3, une représentation d'une fonction de coût possible dans un mode de mise en oeuvre de l'invention.

L'invention propose, dans un réseau privé, de regrouper les faisceaux locaux pour constituer des faisceaux logiques ou faisceaux répartis. Le regroupement des faisceaux locaux en faisceaux répartis permet, du point de vue de l'abonné ou du noeud qui requiert un accès vers un réseau externe, d'éviter de gérer de façon statique l'accès aux faisceaux. L'invention propose encore d'associer aux faisceaux un coût, représentatif de la charge des faisceaux, et de la charge dans le réseau pour accéder aux faisceaux. La prise en compte de ce coût dans le choix du faisceau permet d'optimiser l'utilisation des ressources du réseau; en outre, l'invention permet un nouveau mode de gestion de la saturation des ressources, et limite le trafic usager sur le réseau en cas de saturation; elle utilise en lieu et place de ce trafic usager un trafic entre les noeuds, d'un volume moins important.

La figure 2 montre un exemple de réseau privé selon l'invention. Le réseau 1 de la figure 2 comprend comme celui de la figure 1, trois noeuds 2, 3 et 4, les noeuds 3 et 4 présentant des faisceaux 7 et 8 permettant d'accéder à un réseau externe 6. L'invention propose de représenter les faisceaux 7 et 8 par un faisceau réparti, qui regroupe les deux faisceaux. Le faisceau réparti comprend plusieurs parties locales ou faisceaux locaux - deux dans le cas de la figure 1, à savoir les faisceaux 7 et 8 - qui contiennent les accès physiques, et une partie globale 13, qui est exportée vers les différents noeuds du réseau pour accéder au faisceau réparti.

Dans un tel mode de réalisation, l'accès vers l'extérieur s'effectue par un accès au faisceau réparti 13, sans qu'il soit nécessaire pour le noeud appelant de préciser quelle faisceau local 7 ou 8 est utilisé. Lors d'une prise de faisceau, le noeud appelant S émet une requête précisant le réseau extérieur R auquel il désire accéder; une fonction de routage qui peut être gérée par le faisceau réparti, renvoie

- le faisceau local $F_i$ 7 ou 8 choisi dans le faisceau réparti 13 pour accéder à l'extérieur du réseau privé, ainsi que
- le noeud du réseau privé $P_i$ 3 ou 4 sur lequel est relié le faisceau, ou noeud passerelle.

Le noeud passerelle peut aussi être remplacé par un routage permettant d'accéder au noeud passerelle.

L'invention permet un routage dynamique à l'intérieur du faisceau réparti, entre les différents faisceaux locaux du faisceau réparti. Ce routage dynamique permet d'éviter les problèmes de l'art antérieur, en gérant les différentes ressources du réseau, et en évitant le trafic abonné en cas de saturations des ressources. Le choix entre les différents faisceaux locaux et le routage vers le faisceau local choisi peut s'effectuer de différentes manières. On décrit dans la suite un routage possible, qui prend en compte les charges sur les faisceaux locaux et le trafic pour accéder au noeud passerelle. Dans ce mode de réalisation, le faisceau local $F_i$ utilisé est choisi de sorte à minimiser une fonction de coût, qui s'écrit comme la somme

- d'un coût $d_F(F_i)$ représentatif de la charge du faisceau local; et
- d'un coût $d_I(S, P_i)$ représentatif du routage à travers le réseau privé pour atteindre le noeud passerelle.

Avec ces notations, l'accès à un réseau R par le faisceau réparti est celui qui minimise:

$$d_F(F_i) + d_I(S, P_i)$$

pour les différents faisceaux $F_i$ qui permettent l'accès au réseau R, et pour les différents routages entre le noeud appelant S et le noeud passerelle Pi du faisceau $F_i$.

La figure 3 montre un exemple de la partie de la fonction de coût représentative de la charge d'un faisceau local. Sont représentées en abscisses les ressources disponibles sur le faisceau, par exemple en termes de canaux libres, ou de capacité résiduelle de trafic. En ordonnées est porté un coût. La figure montre essentiellement que le coût est une fonction réelle décroissante d'une variable réelle qui est la capacité résiduelle de trafic. La fonction est en paliers sur la figure, mais pour les calculs, seuls importent les valeurs de la fonction pour des valeurs entières de la capacité résiduelle, par exemple exprimés sous forme du nombre de canaux libres. Pour le cas d'un réseau de type RNIS, dans lequel le faisceau peut comprendre une pluralité d'accès T0 ou T2, est portée en abscisses le nombre de canaux B libres. Par définition, le coût présente une valeur infinie - i.e. une valeur supérieure à toute autre - si le faisceau est coupé, par exemple en cas de défichage d'un câble. Elle présente une valeur "saturée" si aucun canal n'est disponible. Il présente une première valeur LoadCost1 si un seul canal est disponible, une deuxième valeur LoadCost2 si de 2 à k canaux sont disponibles, k étant un entier, et une valeur LoadCost3 = 1 si plus de k canaux sont disponibles, avec LoadCost1 >. LoadCost2. Une valeur de k de l'ordre de 10 est appropriée; le choix d'une valeur de k relativement faible permet d'éviter de recalculer les routages, tant que les faisceaux restent peu encombrés. D'autres valeurs sont possibles, notamment en fonction de la capacité des faisceaux et du nombre de canaux occupés par une communication. Le choix des valeurs LoadCost1 et LoadCost2, comme le choix des valeurs de charge pour lesquelles la fonction change de valeurs dépend de la nature du réseau, et du répartition de charge entre les faisceaux qui est souhaitée.

La partie de la fonction de coût représentative du routage à travers le réseau privé peut simplement être calculée comme une distance dans le réseau privé - par exemple, être représentative du nombre d'artères du réseau privé empruntées pour accéder au noeud passerelle -. On peut aussi utiliser une autre fonction de coût; on pourrait ainsi utiliser pour chaque artère une fonction de coût du type de celle de la figure 3, et ensuite calculer le coût d'un routage comme la somme des coûts de différentes artères empruntées par le routage. Le choix de la fonction de coût dépend de la nature des contraintes, et par exemple peut conduire à optimiser les ressources du réseau privé, ou à minimiser la longueur du routage.

On peut utiliser comme fonction de coût la fonction décrite dans la demande de brevet déposée par la demanderesse le même jour sous le titre "Routage des appels avec débordements dans un réseau privé". Dans cette demande, on cherche à minimiser un vecteur de coût du routage de l'appel, ce vecteur de coût présentant une composante de taxe encourue du fait des débordements et une composante de charge des artères du réseau privé. Pour définir un ordre sur de tels vecteurs, cette demande propose de considérer en premier lieu la composante de taxe encourue du fait des débordements; à taxe égale, on cherche à minimiser la charge des artères empruntées. La composante de charge est alors une fonction décroissante des ressources disponibles sur une artère.

Le calcul de la fonction de coût à l'intérieur du réseau privé peut s'effectuer par application de l'algorithme de Dijkstra. Cet algorithme permet, de façon connue en soi, de calculer un plus court chemin à travers un graphe valué. Selon l'invention, la valuation d'une artère du réseau dépend de la fonction de coût choisie; pour minimiser la distance, chaque artère du réseau privé est affectée de la même valuation; on peut aussi choisir pour une artère une valuation représentative de sa charge, comme expliqué plus haut. Dans un cas comme dans l'autre, ou pour une autre fonction de coût, l'application de l'algorithme de Dijkstra permet de calculer un plus court chemin.

Du point de vue de l'administrateur du réseau privé, l'invention est simplement mise en oeuvre en précisant pour chaque faisceau local s'il fait ou non partie d'un faisceau distribué.

Dans un mode de réalisation, les différents faisceaux du faisceau réparti peuvent échanger des messages de maintenance; ces messages peuvent contenir:

- des informations relatives aux changements d'état des accès physiques, telles que par exemple la mise en service d'un coupleur, ou le défichage d'un câble;
- des informations relatives au changement de coût, du fait de variations des ressources disponibles.

Ces messages permettent une mise à jour des ressources disponibles, et une gestion dynamique des accès vers l'extérieur du réseau privé. Les messages de maintenance générés par les différents faisceaux génèrent sur le réseau privé un trafic moins important que dans les solutions de l'art antérieur. A titre d'exemple, un message de diffusion de mise à jour des ressources d'un faisceau réparti peut avoir une taille de l'ordre de 25 octets; un message d'établissement d'une communication présente une taille minimale de 250 octets.

En outre, la gestion des faisceaux selon l'invention assure que la communication est routée directement vers un faisceau physique permettant l'accès effectif à l'extérieur du réseau privé. On évite de la sorte les problèmes de durée d'établissement de la communication qui se posent dans les systèmes de l'art antérieur.

Avantageusement, on prévoit que les différentes parties locales regroupées dans un faisceau réparti permettent un accès à une même zone de tarification, ou, du point de vue du réseau privé, sont équivalents en coût d'utilisation. Dans le réseau privé, ceci permet une gestion simple du faisceau réparti, en gérant de façon globale les accès au faisceau réparti, et sans devoir gérer les différents coûts possible à l'intérieur du faisceau réparti.

Si le réseau privé achemine des communications de différentes qualités - par exemple des communications de voix et des communications de données - la fonction de routage peut être adaptée de sorte à ne proposer que les faisceaux locaux permettant d'acheminer les communications. Dans l'exemple de la figure 1, si on suppose que le faisceau local 7 n'est pas susceptible d'acheminer des communications de données, alors que le faisceau 8 l'est, la fonction de routage du faisceau réparti pourra retourner l'un ou l'autre des faisceaux locaux pour une demande d'accès vers l'extérieur pour une communication "voix"; en revanche, pour une communication "données", la fonction de routage ne retournerait que le faisceau local 8. La demande de prise de faisceau peut dans ce cas préciser non seulement le réseau auquel l'accès est requis, mais aussi la qualité de la communication à acheminer. En outre, la fonction de coût utilisée dans un tel mode de réalisation peut prendre en compte la capacité résiduelle pour la qualité de communication requise.

Bien entendu, la présente invention n'est pas limitée aux exemples et modes de réalisation décrits et représentés, mais elle est susceptible de nombreuses variantes accessibles à l'homme de l'art. Elle s'applique à d'autres types de réseaux privés que ceux décrits en référence aux exemples, et notamment à des réseaux privés présentant une topologie plus complexe que celui de la figure 2. Elle s'applique pour des accès à une pluralité de réseaux extérieurs, par exemple le réseau public commuté, au moins un réseau public mobile terrestre, au moins un réseau public mobile par satellite, etc. Elle s'applique pour des réseaux privés indépendamment du nombre de différentes qualités de communication, qui n'est pas limité à l'exemple de deux qualités possibles.

L'invention a été décrite en référence à la figure 2 dans le cas simple d'un accès à un seul réseau extérieur. Elle s'applique aussi bien au cas où le réseau privé présente des accès à des réseaux extérieurs différents.

Enfin, la description et les revendications mentionnent l'algorithme de Dijkstra. Il est entendu que ce terme couvre non seulement la version de l'algorithme de plus court chemin proposée par Dijkstra, mais aussi les versions proches, et notamment l'algorithme de Bellman ou l'algorithme de Floyd. On notera que l'algorithme de Bellman ne s'applique que pour les graphes sans circuits.

## Revendications

1. Procédé de routage d'un appel vers un réseau extérieur (6) à partir d'un noeud appelant d'un réseau privé (2, 3, 4) présentant une pluralité de faisceaux (7, 8) d'accès à un réseau extérieur, chaque faisceau étant relié à un noeud passerelle (3, 4) du réseau privé, le procédé comprenant:

    - le calcul d'un coût pour différents routages possibles vers le réseau extérieur, le coût d'un routage vers le réseau extérieur étant fonction du faisceau utilisé et du routage dans le réseau privé entre le noeud appelant et le noeud passerelle dudit faisceau utilisé;
    - le choix d'un routage en fonction des coûts calculés ;

    **caractérisé en ce que** le coût d'un routage vers le réseau extérieur est une fonction décroissante des ressources disponibles sur le faisceau utilisé.

2. Procédé selon la revendication 1, **caractérisé en ce** le coût d'un routage vers le réseau extérieur est en outre une fonction décroissante de la charge des artères utilisées pour le routage dans le réseau privé.

3. Procédé selon la revendication 1, **caractérisé en ce** le coût d'un routage vers le réseau extérieur est en outre une fonction décroissante du nombre d'artères utilisées pour le routage dans le réseau privé.

4. Procédé selon l'une des revendications 1 à 3, **caractérisé en ce que** l'étape de choix s'effectue de sorte à minimiser le coût du routage vers le réseau extérieur.

5. Procédé selon l'une des revendications 1 à 4, **caractérisé en ce qu'**il comprend en outre l'échange dans le réseau privé de messages de maintenance entre les différents noeuds passerelles (3, 4).

6. Procédé selon la revendication 5, **caractérisé en ce qu'**un message de maintenance contient des informations sur les ressources disponibles d'un faisceau d'un noeud passerelle.

7. Procédé selon l'une des revendications 1 à 6, **caractérisé en ce que** l'étape de calcul des différents routages possibles vers le réseau extérieur s'effectue par application de l'algorithme de Dijkstra.

## Patentansprüche

1. Verfahren zur Leitweglenkung eines Anrufs zu einem externen Netz (6) von einem Knoten (2, 3, 4), der aus einem privaten Netz anruft, welches eine Vielzahl von Zugangsleitungen (7, 8) zu einem externen Netz aufweist, wobei jede Leitung mit einem Gateway-Knoten (3, 4) des privaten Netzes verbunden ist, wobei das Verfahren umfasst:

    - die Berechnung eines Kostenbetrages für unterschiedliche mögliche Leitweglenkungen zu dem externen Netz, wobei die Kosten einer Leitweglenkung zu dem externen Netz von der verwendeten Leitung und von der Leitweglenkung im privaten Netz zwischen dem anrufenden Knoten und dem Gateway-Knoten dieser Leitung abhängen;
    - die Wahl eines Leitwegs in Abhängigkeit von den berechneten Kosten;

    **dadurch gekennzeichnet, dass** die Kosten einer Leitweglenkung zu dem externen Netz eine fallende Funktion der auf der verwendeten Leitung verfügbaren Ressourcen sind.

2. Verfahren nach Anspruch 1, **dadurch gekennzeichnet, dass** die Kosten einer Leitweglenkung zu dem externen Netz außerdem eine fallende Funktion der Belastung der Verkehrsadern sind, welche für die Leitweglenkung in dem privaten Netz genutzt werden.

3. Verfahren nach Anspruch 1, **dadurch gekennzeichnet, dass** die Kosten einer Leitweglenkung zu dem externen Netz außerdem eine fallende Funktion der Anzahl von für die Leitweglenkung in dem privaten Netz genutzten Verkehrsadern sind.

4. Verfahren nach einem der Ansprüche 1 bis 3, **dadurch gekennzeichnet, dass** der Schritt der Wahl so erfolgt, dass die Kosten der Leitweglenkung zu dem externen Netz minimiert werden.

**5.** Verfahren nach einem der Ansprüche 1 bis 4, **dadurch gekennzeichnet, dass** es außerdem den Austausch von Wartungsmeldungen zwischen den verschiedenen Gateway-Knoten (3, 4) in dem privaten Netz umfasst.

**6.** Verfahren nach Anspruch 5, **dadurch gekennzeichnet, dass** eine Wartungsmeldung Informationen über die verfügbaren Ressourcen einer Leitung eines Gateway-Knotens enthält.

**7.** Verfahren nach einem der Ansprüche 1 bis 6, **dadurch gekennzeichnet, dass** der Schritt der Berechnung der verschiedenen möglichen Leitweglenkungen zu dem externen Netz durch Anwendung des Dijkstra-Algorithmus erfolgt.

**Claims**

**1.** Method of routing calls to an external network (6) from a calling node of a private network (2, 3, 4) having a plurality of external network access circuit groups (7, 8) each circuit group being connected to a gateway node (3, 4) of the private network, which method:

- calculates a cost for different possible routes to the external network, the cost of a route to the external network being a function of the circuit group used and the route in the private network between the calling node and the gateway node of the circuit group used; and
- chooses a route as a function of the calculated costs;

**characterized in that** the cost of a route to the external network is a decreasing function of the available resources of the circuit group used.

**2.** Method according to claim 1, **characterized in that** the cost of a route to the external network is also a decreasing function of the load of the links used for routing in the private network.

**3.** Method according to claim 1, **characterized in that** the cost of a route to the external network is also a decreasing function of the number of links used for routing in the private network.

**4.** Method according to any of claims 1 to 3, **characterized in that** the step of choosing a route minimizes the cost of the route to the external network.

**5.** Method according to any of claims 1 to 4, **characterized in that** it further comprises the exchange in the private network of maintenance messages between the various gateway nodes (3, 4).

**6.** Method according to claim 5, **characterized in that** a maintenance message contains information on the available resources of a circuit group of a gateway node.

**7.** Method according to any of claims 1 to 6, **characterized in that** the step of calculating various possible routes to the external network uses the Dijkstra algorithm.

FIG_1

FIG_2

FIG_3